# EUROPEAN PATENT SPECIFICATION

(11) **EP 2 539 395 B1**
(45) Date of publication and mention of the grant of the patent: **17.12.2014**
(21) Application number: 11705376.9
(22) Date of filing: 11.02.2011
(51) Int. Cl.: C08K 5/00, C08K 5/5317, C08K 5/5333, C08L 23/02

(54) **FLAME RETARDANT POLYOLEFIN COMPOSITION**
FLAMMHEMMENDE POLYOLEFIN ZUSAMMENSETZUNG
COMPOSITION DE POLYOLEFIN RETARDATRICE AUX FLAMMES

(30) Priority: 24.02.2010 US 307678 P
(43) Date of publication of application: 02.01.2013
(73) Proprietor: ICL-IP America Inc., Ardsley, NY 10502 (US)
(72) Inventor: LEVCHIK, Sergei, V., Croton-on-Hudson NY 10520 (US); ALESSIO, Gerald, R., Emerson NJ 07630 (US); YAAKOV, Yoav, Bar, 85338 Lehavim (IL); FINBERG, Ita, 84465 Beer Sheva (IL); GEORLETTE, Pierre, 84965 Omer (IL)
(74) Representative: van Heuvel, Margaretha
(86) International application number: PCT/US2011/024535
(87) International publication number: WO 2011/106177

(56) References cited:
- WO-A1-00/12608
- WO-A1-2007/081904

## Description

### Field of the Invention

The present invention relates to a flame retardant polymer compositions and more particularly to flame retardant polyolefin compositions. Such compositions are suitable for manufacturing extruded film and/or sheets useful for construction and building materials as well as molded automotive parts and electronic parts.

### Background of the Invention

Polyolefins are represented by two high volume thermoplastic polymers polyethylene and polypropylene, as well as a large number of ethylene-polypropylene copolymers as well as copolymers with other alkylene monomers, e.g., butane-1, 4-methylpentene-1 etc. By varying the ratio of low alkylene to higher alkylene comonomers a broad range of polymers from thermoplastics to elastomers can be produced. Similarly polyethylene can be copolymerized with vinyl acetate or ethyl acrylate. This reduces the crystallinity of polyethylene and results in products having characteristics of thermoplastic elastomers.

Polyolefin resin is widely used in the production of etching tanks, electroplating tanks, hot air ducts, thermal insulation systems, computer cabinets, electrical appliances, household interior decorations, wire and cable jacketings, sockets for decorative lamps and automobile parts among many other items. They are the polymers of choice due to their good processing characteristics, chemical resistance, weathering resistance, electrical properties and mechanical strength. One major disadvantage is that all polyolefins are very flammable. This has generated a growing demand for flame retarded polyolefins.

Although brominated organic compounds are the most effective flame retardants for polyolefins, recently some brominated organic compounds have been subjected to scrutiny because of possible environmental persistence. Brominated organic compounds can also impair some electrical properties of polyolefins such as the current tracking index (CTI). Halogen-free intumescent flame retardant formulations are known, but they have the problem of sensitivity to moisture. Another limitation of halogen-free intumescent flame retardant formulations is that they don't achieve a V-2 UL 94 rating at low flame retardant loading levels.

Some mineral fillers can provide a flame retardant effect in polyolefins. These mineral fillers unfortunately have a low level of flame retardant efficiency and therefore, very high loading is required to achieve an acceptable flame retardant effect. High loading negatively affects the processability of polyolefins, with the resin flow being the property which is most affected. In addition, transparency or translucency of polyolefins is lost when inorganic fillers are used.

It would be desirable to form a polyolefin composition which could be used for the formation of for example, lightweight sheets or films, automotive parts, or electronic parts, which polyolefin uses a minimal amount of flame retardant and has a sufficient degree of flame retardancy to meet the requirements of the construction, automotive or electronic industries. It would also be desirable to have halogen-free flame retardant polyolefin formulations in order to satisfy ecological labels in various geographical areas. In this regard, the flame retardant polyolefin compositions of the prior art suffer from a number of disadvantages. In order to satisfy the flame retardancy requirements for commercial use, the material must pass the UL-94 vertical or horizontal test. In order to meet this test specification, one must use a significant loading of the flame retardant unless a halogen-containing flame retardant is used.

It would also be very desirable to produce transparent or translucent extruded polyolefin sheets or films that have suitable flame retardancy. Although some flame retardants, such as tetrabromobisphenol A bis(dibromopropylether) are melt blendable with polyolefins, they tend to crystallize and exude on the surface, which results in a loss of transparency or translucency over the time. Most of halogen-free flame retardants suitable for polyolefins are not meltable and therefore are not suitable for production of transparent or translucent polyolefin sheets or films.

### SUMMARY OF THE INVENTION

The present invention provides a halogen-free composition which meets the above mentioned desirable properties. That is, a polyolefin polymer composition is provided which is capable of forming extruded sheets or films or molded parts which are light and meet the UL 94 flammability test. This polyolefin polymer composition can be used in building construction applications or for production of electrical or electronic parts, appliances and automotive parts.

In another specific application of this invention flame retarded polyolefin polymer extruded sheets or films can be produced and they are either transparent, or at least, translucent. The polyolefin polymer sheets or films of the present invention are advantageous since they can be nailed, screwed or welded precisely at the desired position, especially on non-even surfaces. The flame retarded transparent or translucent polyolefin polymer sheets herein can be useful for the production of such items as roofing membranes, wall covering, floor coverings, tank covering, ducts, cabinets and the like.

In one embodiment herein there is provided a polyolefin polymer composition comprising (a) a polyolefin polymer and (b) a metal salt of alkyl alkylphosphonic acid of general formula: 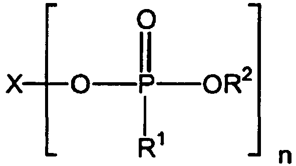 where X is a metal, and R¹ and R² are the same or different linear or branched alkyls containing from one to about twelve carbon atoms, n is equal to the valency of the metal X which is in the range of from 1 to 4.

The polyolefin polymer composition described herein can comprise (a) polyolefin polymer and (b) metal salt of alkyl alkylphosphonic acid. Preferably the metal salt of alkyl alkylphosphonic acid is present in an amount of from 2 to about 25 weight percent based on the total weight of the polyolefin polymer composition. It is desirable that the polyolefin polymer composition be substantially uniformly blended so that the polyolefin polymer and metal salt of alkyl alkylphosphonic acid are evenly distributed. Even distribution of the polyolefin polymer and metal salt of alkyl alkylphosphonic acid throughout the composition provides for translucency to the composition and products made from the composition.

In another specific application of the invention, the polyolefin polymer composition herein can be further cross-linked in order to improve dimensional stability. Techniques of cross-linking polyolefins are well known in the art with most common being free-radical cross-linking, radiation cross-linking or moisture cure cross-linking using alkoxysilyl-grafted polyolefin. Cross-linked polyolefins can be used in the production of cable jackets and tubing.

In another specific application of this invention the polyolefin polymer composition herein is produced in the form of flame retarded polyolefin foam. The polyolefin foam is used for various heat and sound insulation application as well as molding of lightweight parts.

The polyolefin polymer composition can further contain an auxiliary solid phosphate ester flame retardant.

The polyolefin polymer composition can further contain free-radical generator synergists.

The invention herein also comprises extruded polyolefin sheets or injection molded parts which comprise the polyolefin polymer composition described herein.

The invention comprises a method for making a polyolefin polymer composition e.g., a transparent or translucent polyolefin polymer composition, comprising contacting at least one polyolefin polymer with at least one metal salt of alkyl alkylphosphonic acid such as those described herein, and heating the mixture of polyolefin polymer and at least one metal salt of alkyl alkylphosphonic acid to above the melting temperature of the polyolefin polymer. The invention further comprises a method for producing transparent or translucent polyolefin sheets or injected molded polyolefin parts which comprises contacting at least one polyolefin polymer with at least one metal salt of alkyl alkylphosphonic acid, heating the mixture of polyolefin polymer and at least one metal salt of alkyl alkylphosphonic acid to above the melting temperature of the polyolefin polymer, and forming transparent or translucent polyolefin sheets or injected molded polyolefin parts therefrom. Methods of forming polyolefin sheets or injected molded polyoledin parts are well know in the art and thus, will not be explained herein.

### DETAILED DESCRIPTION OF THE PREFERRED EMBODIMENTS

In the practice of the present invention, a composition is prepared which is broadly composed of a mixture of the herein-described compounds. A polyolefin resin of essentially any grade can be selected as the polyolefin polymer according to the desired performance requirements such as formability and mechanical properties, including stiffness, heat resistance, and the like of the resulting polyolefin polymer composition.

The polyolefin polymer (a) is preferably at least one of a polyethylene homopolymer, polyethylene copolymer, polypropylene homopolymer, and polypropylene copolymer. In one embodiment, the polyolefin polymer (a) is high-density polyethylene, low-density polyethylene or linear low density polyethylene. Amorphous, crystalline and elastomeric forms of polypropylene can be applied in this invention. Examples of the copolymers which can be used as the polyolefin polymer (a) are at least one of, such as, but not limited to, ethylene-vinyl acetate (EVA); ethylene-propylene rubber (EPR); ethylene-propylene-diene-monomer rubber (EPDM); and, copolymers of ethylene and propylene with butene-1, pentene-1,3-methylbutene-1, 4-methylpentene-1, octane-1 and mixtures thereof.

The polyolefin polymer is preferably applied in the pellet form having a melting point in the range of from about 150 to about 250 Celsius (C), most preferably from about 175 C to about 230 C. The polyolefin polymer preferably has a specific gravity in the range of from about 0.85 to about 1.2 and most preferably about 0.90-1.0. The polyolefin resin of choice preferably has a melt flow rate in the range of from about 0.2 to about 30 g/10 min., and more preferably, from about 1 to about 12 g/10 min.

In one embodiment herein the polyolefin polymer is suitable for extrusion of transparent or translucent polymer sheets with a thickness of up to 3.2 mm, specifically those having a thickness of from about 0.001mm up to about 3.2 mm.

The polyolefin polymer (a) is preferably present in the polyolefin polymer composition in a range from 75 to 98 wt. %, more preferably from 84 to 96 wt. % based on the total weight of the composition.

The metal salt of alkyl alkyl phosphonic (b) used herein can be any metal salt of alkyl alkylphosphonic acid of general formula (I): 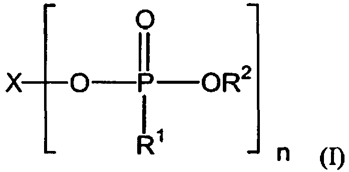 where X is a metal and R¹ and R² are the same or different linear or branched alkyls of from 1 to about 12 carbon atoms, preferably from 1 to about 4 carbon atoms, such as the non-limiting examples of methyl, ethyl, propyl, isopropyl, butyl, iso-butyl and sec-butyl, n is equal to the valency of the metal X which is in the range of from 1 to 4, preferably 2 or 3.

Metals, i.e., X of the above formula, which can be present in the metal salt of alkyl alkylphosphonic acid (I) include alkaline earth or transition metals such as the non-limiting group consisting of Ca, Mg, Zn, Al, Fe, Ni, Cr, Ti.

In the most preferable embodiment the metal salt is aluminum salt of methyl methylphosphonic acid (AMMP), where X is aluminum, R₁ and R₂ is methyl and n=3. AMMP contains a high level (i.e., 26 weight percent) of active phosphorus. AMMP can be synthesized either by reacting methyl methylphosphonate with an aqueous solution of sodium hydroxide followed by precipitation with aluminum chloride, or by direct reaction of aluminum hydroxide with methyl methylphosphonate at 180° C with intensive stirring.

Preferably, the metal salt of alkyl alkylphosphonic acid is represented by a powder with an average particle size of less than about 25 microns, more preferably less than about 10 microns and even more preferably less than about 5 microns. The preferred metal salt of alkyl alkylphosphonic acid according to the present embodiments comprises a plurality of particles having an average size in the range of from about 0.1 microns to about 3 microns. It will be understood that any of the aforementioned average particle size ranges can have a lower end point of from about 0.1 microns.

Preferably, the metal salt of alkyl alkylphosphonic acid is present in the flame retarded polyolefin composition in the range from 2 to 25 wt. % and more preferably in the range from 4 to 16 wt. % based on the total weight of the polyolefin polymer composition.

In one embodiment of the invention the metal salt of alkyl alkylphosphonic acid is used in the form of pellets or masterbatch concentrates in order to improve handling and in order to decrease dusting.

In one embodiment herein the polyolefin polymer composition can further optionally comprise an auxiliary solid phosphate ester. The role of phosphate ester is to improve resin flow and provide additional flame retardancy. The solid phosphate ester is preferably an aromatic phosphate or bisphosphate.

In one non-limiting embodiment the solid phosphate ester is selected from the group consisting of triphenyl phosphate, hydroquinone bis(diphenyl phosphate), resorcinol bis(diphenyl phosphate), 4,4'-biphenol bis(diphenyl phosphate), 4,4'-bis(diphenyl phosphate), bisphenol A bis(diphenyl phosphate), bisphenol S bis(diphenyl phosphate), bisphenol F (bisdiphenyl phosphate); and, combinations of any of the herein described solid phosphate esters.

Preferably solid phosphate ester is presented in the polyolefin polymer composition in the range from 0.5 wt. % to 8 wt. % and most preferably in the range from 1 wt. % to 5 wt. % based on the total weight of the polyolefin polymer composition.

In another embodiment of this invention a free radical generator synergist is optionally used in the polyolefin polymer composition, which free radical generator synergist is an organic compound which is stable at the processing temperatures of about from 150° C to about 250° C, and decomposes above these temperatures (at about from 220° C to about 350° C) to give relatively stable free radicals.

Free radical generator synergists are preferably organic compounds which generate stable free radicals upon thermal decomposition. Free radical generator synergist(s) must be extrudable at the extrusion temperature for the polyolefin and must be compatible with the polyolefin and any dispersant in the composition. Also, the free radical generator synergist should have an acceptable vapor pressure and a half-life of at least about 1 hour at 110°C and preferably 15 hours at 110°C.

The free radical generator synergist may be present in at least 0.2 wt. % and preferably 0.5 wt. % based on the total weight of the polyolefin polymer composition. Generally, the free radical generator is not present in excess of 1 wt. % because the function it is to perform is ably accomplished with lesser amounts and because amounts in excess of 1 wt. % generally begin to affect processability of the polyolefin polymer composition.

Since an intimate contact between the polyolefin and metal salt of alkyl phosphonic acid and any other optional additives herein is desired, the free radical generator should be capable of being substantially uniformly dispersed within the polyolefin. Therefore, it must be in particulate solid or liquid form. A large particle size would be acceptable if the compound melts at the processing temperature of the polyolefin composition.

Some non-limiting examples of free radical generators are at least one of 2,3-dimethyl-2,3-diphenyl-butane; 2,3-dimethyl-2,3-diphenyl-hexane; bis(alpha-phenylethyl) sulfone; 1,1'-diphenylbicyclohexyl, 2,2'-dimethyl-2,2'-azobutane; 2,2'-dibromo-2,2'-azobutane; 2,2'-dichloro-2,2'-azobutane; 2,2'-dimethyl-2,2'-azobutane-3,3'4,4'-tetracarboxylic acid; dicumyl peroxide; benzoyl peroxide; 2, 5-dimethyl-2, 5-bis (tert butylperoxy) hexane; 2, 5-dimethly-2, 5-bis (tert butylperoxy) hexyne-3; di (tert butyl) peroxide; hydroperoxides, e.g., 2, 5-dimethylhexane-2, 5-dihydroperoxide; tertiary butyl hydroperoxide; and cumene hydroperoxide; as for example, where one such free radical generator will not by itself fully satisfy the requirements given herein for such a polyolefin polymer composition, but a combination of two or more such free radical generators as defined herein does satisfy these requirements.

In another embodiment of this invention the polyolefin polymer composition herein can further optionally contain nanoclay, provided it does not affect clarity of transparent or translucent polyolefin sheets or films.

In even another embodiment of this invention the polyolefin polymer composition can further optionally contain zinc borate.

The polyolefin composition may further comprise one or more additional additives which are known in the art, such as, for example, ultraviolet and light stabilizers, UV screeners, UV absorbers, heat stabilizers, antioxidants, dispersing agents, lubricants and combinations thereof.

In the method of the invention, the polyolefin polymer, the metal salt of alkyl alkylphosphoric acid and any other components are blended in the desired quantities and heated to a temperature above the melting point of the polyolefin polymer. The heating and blending can be done in either order, however, in the preferred embodiment, these processes are conducted simultaneously. The mixing may be conducted in any suitable equipment including a batch mixer, Banbury mixer, single or twin screw extruder, ribbon blender, injection molding machine, two roll mill or the like.

In one embodiment herein, the polyolefin polymer composition of this invention will pass the Underwriters Laboratories flammability test UL-94 with at least an HB rating or more preferably with at least a V-2 rating.

Another important characteristic of the polyolefin polymer composition of this invention is that it preserves translucency even after prolonged storage at 70°C, for example even after storage at 70°C for at least 7 days, preferably at least 30 days.

In one embodiment of the invention herein the polyolefin polymer composition shows no exudation of the metal salt of alkylphosphonic acid to the surface of the polyolefin polymer after storage at 70°C for at least 30 days.

In one embodiment of the invention herein the polyolefin polymer composition is a translucent polymer composition. It is desirable that the polyolefin polymer composition not contain any component(s) and/or amount of component(s) which would negatively impact the translucency of the polyolefin polymer composition. Some non-limiting examples of components which would negatively impact the translucency of the polyolefin composition are any one or more of glass and mineral fillers such as glass fibers, carbon fibers, talc, silica, magnesium hydroxide and aluminum hydroxide.

### Examples 1. Materials

The materials used in this study are listed in Table 1.

**TABLE 1**

| Trade name (Supplier) | Chemical name | Function |
|---|---|---|
| EVA - Elvax 265 (DuPont) | Ethylene Vinyl Acetate | Resin |
| PP - R12C-00 (INEOS) | Polypropylene Random Copolymer | Resin |
| AMMP (ICL-IP) | Aluminum salt of methyl methylphosphonic acid | flame retardant (FR) |
| FR-720 (ICL-IP) | Tetrabromobisphenol A bis (2,3 dibromopropyl ether) | FR |

### 2. Compounding

Compounding was performed using a C.W. Brabender conical twin screw co-rotating extruder with an L/D = 10.6. The extrudate was water cooled and pelletized using a

Conair model 304 pelletizer. The resulting pellets were dried in a forced air oven at 80°C for 16 hours. The compounding conditions are presented in Table 2

**TABLE 2**

| Parameters | Units | EVA | PP |
|---|---|---|---|
| Screws Conical twin | | | |
| Feeding zone temperature (T₁) | °C | No heating | No heating |
| T₂ | °C | 100 | 190 |
| T₃ | °C | 150 | 200 |
| T₄ | °C | 170 | 215 |
| T₅ (Die) | °C | 175 | 230 |
| Temperature of melt | °C | ∼178 | 235∼ |
| Screw speed | RPM | 100 | 110 |
| Feeding rate | Kg/h | 2.5 | 2.5 |

3. Injection molding.Test specimens were prepared by injection molding using an Arburg 270S Allrounder 250-150. The injection molding conditions are presented in Table 3.

**TABLE 3**

| Parameters | Units | EVA | PP |
|---|---|---|---|
| T₁ (Feeding zone) | °C | 100 | 195 |
| T₂ | °C | 120 | 225 |
| T₃ | °C | 150 | 230 |
| T₄ | °C | 150 | 240 |
| T₅ (nozzle) | °C | 175 | 245 |
| Mold temperature | °C | 50 | 30 |
| Injection pressure | psi | 750 | 700 |
| Holding pressure | psi | 210 | 210 |
| Back pressure | psi | 15 | 10 |
| Injection time | sec | 1.3 | 1.3 |
| Holding time | sec | 4 | 4 |
| Cooling time | sec | 27 | 25 |
| Mold closing force | T | 22.5 | 22.5 |
| Filling volume (portion) | inch³ | 1.10 | 1.1 |
| Injection speed | inch³/sec | 1.8 | 1.8 |

### 4. Test methods.

Specimens were conditioned at 23°C and 50% RH for 72 hours prior to UL-94 testing. Accelerated aging took place at 70°C in an electric convection oven and lasted up to 30 days. After certain periods of time specimens were taken from the oven and inspected for exudation and tested for clarity using opacity charts available from BYK-Gardner and referenced in ASTM D 344, D 2805, and ISO 6504-3. Translucency was graded on a scale from 1 to 5, with 1 given the clarity of the base resin and 5 being opaque. Tests used in this work are summarized in Table 4.

**TABLE4**

| Property measured | Method | Apparatus |
|---|---|---|
| Flammability Vertical test at 3.2 mm | UL-94 | Atlas HVUL Chamber |
| Exudation test | Accelerated aging at 70°C. Visual observation | Blue M convection oven |
| Clarity test | Accelerated aging at 70°C. Opacity charts | Blue M convection oven |
| Izod notched impact energy | ASTM D-256-81 | Monitor Impact Tester Pendium type TMI-Model 43-02-01 |
| HDT - Heat Deflection Temperature | ASTM D 648 (66 psi) | Automatic Deflection Tester Tinius Olsen Model DS-5 |
| Tensile properties | ASTM D 638-95 v=50 mm/min | Instron material testing machine Model 5565 |
| Hardness, Shore A | ASTM D 2240 | The Shore Instrument & Mfg. |

### 5. Results

Results of UL-94 test, examination of exudation and clarity tests are reported in Table 5 for polypropylene and Table 6 for EVA.

**TABLE 5**

| Example | | 1 | 2 | 3 | 4 | C-1 | C-2 | C-3 | C-4 |
|---|---|---|---|---|---|---|---|---|---|
| PP | wt. % | 96 | 94 | 92 | 90 | 96 | 94 | 92 | 90 |
| AMMP | wt. % | 4 | 6 | 8 | 10 | | | | |
| FR-720 | wt. % | | | | | 4 | 6 | 8 | 10 |

| | UL-94 at 3.2 mm | | | | | | | | |
|---|---|---|---|---|---|---|---|---|---|
| Rating | | NR | V-2 | I V-2 | V-2 | V-2 | V-2 | | |
| Storage day(s) at 70 C | Translucency^{a} | | | | | | | | |
| Initial | | 1 | 1 | 1 | 1 | 1 | 5 | ex | ex |
| 1 | | 1 | 1 | 1 | 1 | 2 | 5 | | |
| 5 | | 1 | 1 | 1 | 1 | 2 | 5 | | |
| 7 | | 1 | 1 | 1 | 1 | 2 | 5 | | |
| 12 | | 1 | 1 | 1 | 1 | 3 | 5 | | |
| 14 | | 1 | 1 | 1 | 1 | 3 | 5 | | |
| 30 | | 1 | 1 | 1 | 1 | 3 | 5 | | |
| Storgage day(s) at 70 C | Exudation | | | | | | | | |
| Initial | | N | N | N | N | N | N | ex | ex |
| I | | N | N | N | N | N | N | | |
| 5 | | N | N | N | N | N | N | | |
| 7 | | N | N | N | N | N | N | | |
| 12 | | N | N | N | N | N | N | | |
| 14 | | N | N | N | N | N | N | | |
| 30 | | N | N | N | N | N | N | | |

| | Physical Properties | | | | | | | | |
|---|---|---|---|---|---|---|---|---|---|
| Tensile Strength | MPa | | 26.8 | 26.4 | | 26.8 | | | |
| Tensile Elongation | % | | 4.1 | 4.0 | | 3.8 | | | |
| Flex Modulus | Mpa | | 490 | 498 | | 460 | | | |
| Izod Impact | J/m | | 25.3 | 22.9 | | 25.8 | | | |
| HDT (66 psi) | °C | | 88 | 88 | | 85 | | | |

| | | | | | | | | | |
|---|---|---|---|---|---|---|---|---|---|
| ^{a}Translucency was graded on a visual observation scale from 1 to 5, with 1 given the clarity of the base resin and 5 being opaque. Ex is understood in Tables 5 and 6 to mean that exudation of the flame retardant on the surface of the polymer was detected. In Table 5, examples C-3 and C-4 exuded flame retardant initially and thus no translucency data was obtained, which is why examples C-3 and C-4 show only ex indicated in the initial row of storage days. Since the examples C-3 and C-4 exuded initially, no further exudation data was obtained which why no exudation data is presented beyond the initial row of storage days. N is understood to mean no exudation in Tables 5 and 6. NR is understood to mean no rating in UL-94 test in Tables 5 and 6. | | | | | | | | | |

To determine translucency a template of reading material was placed on a laboratory bench 40 inches below an example specimen prepared as described above. The reading material was viewed in the presence of standard fluorescent light. Two people performed test and graded specimens from 1 (being completely clear) to 5 (opaque, not readable). If there was discrepancy in the grading, a 3^{rd} independent person was involved.

**TABLE 6.**

| Example | | 5 | 6 | 7 | 8 | C-5 | C-6 | C-7 | C-8 |
|---|---|---|---|---|---|---|---|---|---|
| EVA | wt. % | 96 | 94 | 92 | 90 | 96 | 94 | 92 | 90 |
| AMMP | wt. % | 4 | 6 | 8 | 10 | | | | |
| FR-720 | wt. % | | | | | 4 | 6 | 8 | 10 |

| | UL-94 at 3.2 mm | | | | | | | | |
|---|---|---|---|---|---|---|---|---|---|
| Rating | | V-2 | V-2 | V-2 | V-2 | NR | V-2 | V-2 | V-2 |
| Storage day(s) at 70 C | Translucency^{a} | | | | | | | | |
| Initial | | 1 | 1 | 1 | 1 | | 1 | 1 | 1 |
| 1 | | 1 | 1 | 1 | 1 | | 1 | 1 | 1 |
| 5 | | 1 | 1 | 1 | 1 | | 1 | 1 | 1 |
| 7 | | 1 | 2 | 2 | 2 | | 1 | 1 | 1 |
| 12 | | 1 | 2 | 2 | 2 | | 1 | 1 | 1 |
| 14 | | 1 | 2 | 2 | 2 | | 1 | 1 | 1 |
| 30 | | 1 | 2 | 2 | 2 | | 1 | 1 | 1 |
| Storage day(s) at 70 C | Exudation | | | | | | | | |
| Initial | | N | N | N | N | | N | N | N |
| 1 | | N | N | N | N | | N | N | N |
| 5 | | N | N | N | N | | N | N | N |
| 7 | | N | N | N | N | | N | N | N |
| 12 | | N | N | N | N | | N | N | N |
| 14 | | N | N | N | N | | N | N | N |
| 30 | | N | N | N | N | | N | ex | ex |

| | Physical Properties | | | | | | | | |
|---|---|---|---|---|---|---|---|---|---|
| Tensile Strength | Mpa | 4.7 | 4.5 | | | | 4.3 | | |
| Tensile Elongation | % | >200 | >200 | | | | >200 | | |
| Flex Modulus | Mpa | 4.8 | 5.6 | | | | 4.4 | | |
| Hardness, Shore A | | 87 | 88 | | | | 85 | | |

| | | | | | | | | | |
|---|---|---|---|---|---|---|---|---|---|
| ^{a}Translucency was graded on a visual observation scale from 1 to 5, with 1 given the clarity of the base resin and 5 being opaque. ex and NR is as defined above under Table 5. C-7 and C-8 showed exudation after 30 days which is why ex is indicated in the 30 day storage period row for these examples. | | | | | | | | | |

### 6. Conclusions

The polypropylene formulations of Table 5 containing AMMP showed a V-2 rating at 6, 8 and 10 wt. % loading (inventive examples 2, 3 and 4). The polypropylene formulation containing FR-720 showed a V-2 rating at 4 and 6 wt. % (comparative examples 1 and 2). Polypropylene formulations containing FR-720 at 8 and 10 wt. % showed exudation after injection molding and therefore they were not further tested (comparative examples 3 and 4).

All EVA formulations, Table 6, containing AMMP showed a V-2 rating (inventive examples 5-8). EVA formulation containing 4 wt. % FR-720 failed the UL-94 vertical test (comparative example 5). EVA formulations containing 6, 8 and 10 % FR-720 showed a V-2 rating in the UL-94 test (comparative examples 6, 7 and 8).

All polypropylene formulations in Table 5, and all EVA formulations in Table 6, containing AMMP do not show any signs of exudation even at 30 days at 70°C. All polypropylene formulations and all EVA formulations containing 4 and 6 wt. % of FR-720 do not show signs of exudation on the surface after 30 days at 70°C (comparative examples 1, 2, 5 and 6). However, polypropylene formulations with 8 and 10 wt. % of FR-720 showed exudation right after injection molding (comparative examples 3 and 4). EVA formulations with 8 and 10 wt. % of FR-720 did not show exudation after injection molding, but showed exudation after 30 days at 70°C (comparative examples 7 and 8).

Polypropylene formulation containing 6, 8 and 10 wt. % AMMP in Table 5, were V-2 rated in UL-94 test and they preserved their original clarity for 30 days at 70°C (inventive examples 2, 3 and 4). In contrast, polypropylene formulation with 6 wt. % FR-720 was opaque just after injection molding (comparative example 2). Another polypropylene formulation containing FR-720 was V-2 rated in the UL-94 test and it showed clarity after injection molding, but it deteriorated over a storage period at 70°C (comparative example 1).

The EVA formulation containing 4 wt. % AMMP in Table 6 was V-2 rated in the UL-94 test and didn't change clarity after a 30 day storage at 70°C (inventive example 5). In contrast, the EVA formulation containing 4 wt. % FR-720 didn't pass the UL-94 test (comparative example 5). The EVA formulations containing 6, 8 and 10 wt. % AMMP showed minor deterioration of clarity after 7 day of storage at 70°C and clarity didn't change further after storage up to 30 days (inventive examples 6, 7 and 8). Although the EVA formulations containing 8 and 10 wt. % FR-720 didn't show noticeable change in clarity after 30 days they showed signs of exudation (comparative examples 7 and 8). The only EVA formulation containing 6 wt. % FR-720 showed overall good performance in all tests (comparative example 6).

Both PP (inventive examples 2 and 3) and EVA (inventive examples 5 and ) formulations passing V-2 flammability test and not changing clarity in the storage test showed higher Flexural Modulus than PP (comparative example 1) and EVA (comparative example 6) respectively. PP containing AMMP (inventive examples 2 and 3) showed higher heat distortion temperature compare PP containing FR-720 (comparative example 1). EVA containing AMMP (inventive examples 5 and 6) showed higher Shore A hardness compare to EVA containing FR-720 (comparative example 6).

In total it is evident that AMMP shows better flame retardant performance, better permanency in polyolefin compositions, better clarity of the formulations and better physical properties. Polyolefin formulations containing AMMP are halogen-free. In one embodiment the polyolefin polymer composition herein can be halogen-free.

## Claims

1. A polyolefin polymer composition consisting essentially of a polyolefin polymer which is at least one of a polyethylene homopolymer, polypropylene homopolymer, ethylene-vinyl acetate, ethylene-propylene rubber, ethylene-propylene-diene-monomer rubber and copolymers of ethylene and propylene with butene-1, pentene-1, 3-methylbutene-1, 4-methylpentene-1, octane-1 and mixtures thereof and salt of alkyl alkylphosphonic acid of general formula: 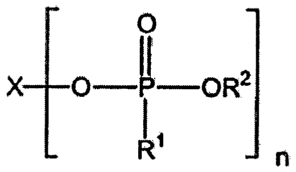 where X is a metal and R¹ and R² are the same or different linear or branched alkyls containing from one to about twelve carbon atoms, n is equal to the valency of the metal X which is in the range of from 1 to 4.

2. The polyolefin polymer composition of Claim 1 wherein the polyethylene homopolymer is at least one of high density polyethylene, low density polyethylene and, linear low density polyethylene.

3. The polyolefin polymer composition of Claim 1 wherein X is selected from the group consisting of Ca, Mg, Zn, Al, Fe, Ni, Cr, and Ti, or the metal salt of alkyl alkylphosphonic acid is aluminum methyl methylphosphonate.

4. The polyolefin polymer composition of Claim 1 wherein the composition is a flame retardant polyolefin composition having as minimum HB rating in the UL-94 horizontal burning test, or having as minimum V-2 rating in the UL-94 vertical burning test.

5. The polyolefin polymer composition of Claim 1 wherein the composition shows no exudation of the metal salt of alkyl alkylphosphonic acid to the surface of the polyolefin polymer after storage at 70°C for at least 30 days.

6. The polyolefin polymer composition of Claim 1 wherein the composition is a translucent polymer composition.

7. The polyolefin polymer composition of Claim 5 wherein the composition does not lose any clarity after storage at 70°C for at least 30 days.

8. The polyolefin polymer composition of Claim 1 wherein the metal salt of alkyl alkylphosphonic acid is present in the range from 2 to 25 percent of the total weight of the composition, or in the range from 4 to 16 percent of the total weight of the composition.

9. The polyolefin polymer composition of Claim 1 further comprising a free-radical generator synergist or a solid phosphate ester.

10. The polyolefin polymer composition of Claim 9 wherein the solid phosphate ester is an aromatic phosphate.

11. An extruded sheet or film, or a molded automotive or electronic part, comprising the polyolefin polymer composition of Claim 1.

12. An article selected from the group consisting of an etching tank, an electroplating tank, a hot air duct, a thermal insulation system, a computer cabinet, an electrical appliance, a household interior decoration, wire and cable jacketing, a socket for a decorative lamp and an automobile part comprising the polyolefin polymer composition of Claim 1.

13. A method of making a polyolefin polymer composition of Claim 1, the method comprising:
contacting at least one polyolefin polymer with at least one metal salt of alkyl alkylphosphonic acid and;
heating the mixture of polyolefin polymer and at least one metal salt of alkyl alkylphosphonic acid to above the melting temperature of the polyolefin polymer.

## Patentansprüche

1. Eine Polyolefinpolymerzusammensetzung im Wesentlichen bestehend aus einem Polyolefinpolymer, welches mindestens eines von einem Polyethylenhomopolymer, Polypropylenhomopolymer, Ethylenvinylacetat, Ethylene-Propylene-Kautschuk, Ethylene-Propylene-Dien-Monomer-Kautschuk und Copolymeren von Ethylen und Propylen mit 1-Buten, 1-Penten, 3-Methyl-1-buten, 4-Methyl-1-penten, 1-Octan und Mischungen davon ist und dem Salz der Alkylalkylphosphonsäure der allgemeinen Formel: 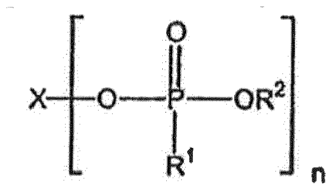 wobei X ein Metall ist und R¹ und R² die gleichen oder verschiedene lineare oder verzweigte Alkyle sind, enthaltend 1 bis ungefähr 12 Kohlenstoffatome, n gleich der Valenz des Metalls X ist, welche im Bereich von 1 bis 4 ist.

2. Die Polyolefinpolymerzusammensetzung nach Anspruch 1, wobei das Polyethylenhomopolymer mindestens eines von Polyethylen hoher Dichte, Polyethylen niedriger Dichte und linearem Polyethylen niedriger Dichte ist.

3. Die Polyolefinpolymerzusammensetzung nach Anspruch 1, wobei X ausgewählt ist aus der Gruppe bestehend aus Ca, Mg, Zn, Al, Fe, Ni, Cr und Ti, oder das Metallsalz der Alkylalkylphosphonsäure Aluminiummethylmethylphosphonat ist.

4. Die Polyolefinpolymerzusammensetzung nach Anspruch 1, wobei die Zusammensetzung eine flammhemmende Polyolefinzusammensetzung ist, die mindestens eine HB-Bewertung im horizontalen UL-94-Brenntest oder mindestens eine V-2-Bewertung im vertikalen UL-94-Brenntest hat.

5. Die Polyolefinpolymerzusammensetzung nach Anspruch 1, wobei die Zusammensetzung kein Ausschwitzen des Metallsalzes der Alkylalkylphosphonsäure hin zur Oberfläche des Polyolefinpolymers nach Lagerung bei 70 °C für mindestens 30 Tage zeigt.

6. Die Polyolefinpolymerzusammensetzung nach Anspruch 1, wobei die Zusammensetzung eine transluzente Polymerzusammensetzung ist.

7. Die Polyolefinpolymerzusammensetzung nach Anspruch 5, wobei die Zusammensetzung nach Lagerung bei 70 °C für mindestens 30 Tage keine Klarheit verliert.

8. Die Polyolefinpolymerzusammensetzung nach Anspruch 1, wobei das Metallsalz der Alkylalkylphosphonsäure in einem Bereich von 2 bis 25 Prozent des Gesamtgewichts der Zusammensetzung oder in einem Bereich von 4 bis 16 Prozent des Gesamtgewichts der Zusammensetzung vorhanden ist.

9. Die Polyolefinpolymerzusammensetzung nach Anspruch 1, des Weiteren umfassend einen Synergisten für Erzeuger freier Radikale oder einen festen Phosphatester.

10. Die Polyolefinpolymerzusammensetzung nach Anspruch 9, wobei der feste Phosphatester ein aromatisches Phosphat ist.

11. Eine extrudierte Folienbahn oder Folie, oder ein vorgeformtes Automobil- oder Elektronikbauteil, umfassend die Polyolefinpolymerzusammensetzung nach Anspruch 1.

12. Ein Artikel ausgewählt aus der Gruppe bestehend aus einem Ätztank, einem Elektroplattiertank, einer Heißluftleitung, einem thermischen Isoliersystem, einem Computergehäuse, einer elektrischen Vorrichtung, einer Haushaltsinnendekoration, Leitungs-und Kabelummantelung, einem Sockel für eine dekorative Lampe und einem Automobilbauteil umfassend die Polyolefinpolymerzusammensetzung nach Anspruch 1.

13. Ein Verfahren zur Herstellung einer Polyolefinpolymerzusammensetzung nach Anspruch 1, das Verfahren umfassend:
In-Kontakt-bringen mindestens eines Polyolefinpolymers mit mindestens einem Metallsalz einer Alkylalkylphosphonsäure und;
Erhitzen der Mischung des Polyolefinpolymers und des mindestens eines Metallsalzes der Alkylalkylphosphonsäure auf Temperaturen über der Schmelztemperatur des Polyolefinpolymers.

## Revendications

1. Composition de polymère de polyoléfine constituée essentiellement d'un polymère de polyoléfine qui est au moins l'un parmi un homopolymère de polyéthylène, un homopolymère de polypropylène, un éthylène-acétate de vinyle, un caoutchouc éthylène-propylène, un caoutchouc éthylène-propylène-diène-monomère et des copolymères d'éthylène et de propylène avec du butène-1, pentène-1, 3-méthylbutène-1, 4-méthylpentène-1, octane-1 et des mélanges de ceux-ci et d'un sel d'acide alkyl alkylphosphonique de formule générale : 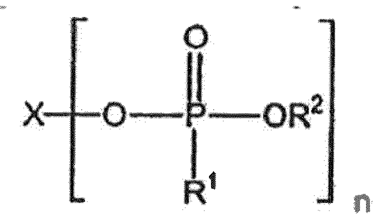 où X est un métal et R¹ et R² sont des alkyles linéaires ou ramifiés identiques ou différents, contenant de un à environ douze atomes de carbone, n est égal à la valence du métal X, qui se situe dans la plage allant de 1 à 4.

2. Composition de polymère de polyoléfine de la revendication 1, dans laquelle l'homopolymère de polyéthylène est au moins l'un parmi un polyéthylène haute densité, un polyéthylène basse densité et, un polyéthylène linéaire basse densité.

3. Composition de polymère de polyoléfine de la revendication 1, dans laquelle X est choisi dans le groupe constitué de Ca, Mg, Zn, Al, Fe, Ni, Cr et Ti, ou le sel métallique d'acide alkyl alkylphosphonique est du méthylphosphonate de méthyle et d'aluminium.

4. Composition de polymère de polyoléfine de la revendication 1, dans laquelle la composition est une composition de polyoléfine ignifuge ayant au minimum un classement HB dans le test de combustion horizontale UL-94, ou ayant au minimum un classement V-2 dans le test de combustion verticale UL-94.

5. Composition de polymère de polyoléfine de la revendication 1, dans laquelle la composition ne présente pas d'exsudation du sel métallique d'acide alkyl alkylphosphonique à la surface du polymère de polyoléfine après un stockage à 70°C pendant au moins 30 jours.

6. Composition de polymère de polyoléfine de la revendication 1, dans laquelle la composition est une composition de polymère translucide.

7. Composition de polymère de polyoléfine de la revendication 5, dans laquelle la composition ne perd pas de clarté après un stockage à 70°C pendant au moins 30 jours.

8. Composition de polymère de polyoléfine de la revendication 1, dans laquelle le sel métallique d'acide alkyl alkylphosphonique est présent dans la plage allant de 2 à 25% du poids total de la composition, ou dans la plage allant de 4 à 16% du poids total de la composition.

9. Composition de polymère de polyoléfine de la revendication 1, comprenant en outre un synergiste de générateur de radicaux libres ou un ester phosphate solide.

10. Composition polymère de polyoléfine de la revendication 9, dans laquelle l'ester phosphate solide est un phosphate aromatique.

11. Feuille ou film extrudé(e), ou une pièce électronique ou automobile moulée, comprenant la composition de polymère de polyoléfine de la revendication 1.

12. Article choisi dans le groupe constitué d'un réservoir de gravure, d'un réservoir de galvanoplastie, d'un conduit d'air chaud, d'un système d'isolation thermique, d'une armoire informatique, d'un appareil électrique, d'une décoration intérieure ménagère, d'un gainage de fil et de câble, d'une douille pour une lampe décorative et d'une pièce pour automobile comprenant la composition de polymère de polyoléfine de la revendication 1.

13. Procédé de fabrication d'une composition de polymère de polyoléfine de la revendication 1, le procédé comprenant le fait :
de mettre en contact au moins un polymère de polyoléfine avec au moins un sel métallique d'acide alkyl alkylphosphonique et ;
de chauffer le mélange de polymère de polyoléfine et au moins un sel métallique d'acide alkyl alkylphosphonique à une température supérieure à la température de fusion du polymère de polyoléfine.
